# FASCICULE DE BREVET EUROPEEN

(11) **EP 2 294 369 B1**
(45) Date de publication et mention de la délivrance du brevet: **05.06.2019**
(21) Numéro de dépôt: 09749996.6
(22) Date de dépôt: 24.04.2009
(51) Int. Cl.: G01G 3/16, G01G 3/13

(54) **DISPOSITIF POUR LA DETECTION GRAVIMETRIQUE DE PARTICULES EN MILIEU FLUIDE COMPRENANT UN OSCILLATEUR ENTRE DEUX CANAUX FLUIDIQUES, PROCEDE DE REALISATION ET METHODE DE MISE EN OEUVRE DU DISPOSITIF**
EINRICHTUNG ZUR GRAVIMETRISCHEN DETEKTION VON TEILCHEN IN EINEM FLUIDMEDIUM MIT EINEM OSZILLATOR ZWISCHEN ZWEI FLUIDKANÄLEN, PRODUKTIONSPROZESS UND VERFAHREN ZUR VERWENDUNG DER EINRICHTUNG
DEVICE FOR THE GRAVIMETRIC DETECTION OF PARTICLES IN A FLUID MEDIUM, COMPRISING AN OSCILLATOR BETWEEN TWO FLUID CHANNELS, PRODUCTION PROCESS AND METHOD OF EMPLOYING THE DEVICE

(30) Priorité: 20.05.2008 FR 0802744
(43) Date de publication de la demande: 16.03.2011
(73) Titulaire: Commissariat à l'Énergie Atomique et aux Énergies Alternatives, 75015 Paris (FR)
(72) Inventeur: AGACHE, Vincent, F-38950 St Martin Le Vinoux (FR); BALERAS, François, F-38450 Saint Georges de Commiers (FR); CONSTANTIN, Olivier, F-38 000 Grenoble (FR)
(74) Mandataire: Gevers & Orès
(86) Numéro de dépôt international: PCT/FR2009/000486
(87) Numéro de publication internationale: WO 2009/141515

(56) Documents cités:
- EP-A- 1 059 521
- WO-A-00/20850
- WO-A1-2007/148522
- US-A- 5 306 644
- US-A- 5 349 844
- US-A- 5 744 902
- US-A- 5 920 007
- US-A1- 2004 016 297
- US-A1- 2007 119 232

## Description

La présente invention concerne le domaine technique de la détection gravimétrique en milieu fluide (liquide, gazeux) à partir de structures résonantes de types NEMS/MEMS (Nano Electro Mechanical System/Micro Electro Mechanical System).

Cette détection gravimétrique repose, de façon générale, sur la détection de variations de la fréquence de vibration d'un oscillateur électromécanique lorsqu'une molécule se dépose à sa surface.

Tout oscillateur soumis à une force de vibration entre lui-même en vibration. A certaines fréquences, propres à chaque oscillateur, l'amplitude de vibration est maximale. Ces fréquences sont appelées « fréquences de résonance ». Ainsi, soumettre un oscillateur à une vibration de fréquence égale à l'une de ses fréquences de résonance permet de détecter le dépôt d'une particule sur l'oscillateur. En effet, ce dépôt modifie la fréquence de vibration de l'oscillateur qui ne vibre donc plus à une fréquence de résonance. L'amplitude de vibration est alors réduite et peut être détectée facilement. La différence minimale d'amplitude pouvant être détectée détermine la résolution du dispositif de détection, c'est-à-dire le poids minimal détectable d'une particule se déposant sur l'oscillateur.

Cette méthode peut être utilisée pour :
- détecter la présence d'une molécule,
- détecter la masse de la molécule,
- caractériser la cinétique d'association/dissociation d'une molécule avec un élément de reconnaissance moléculaire complémentaire (anticorps, sondes d'acides nucléiques ou encore polymère imprimé) greffé préalablement à dessein sur la surface dudit oscillateur.

Cette invention concerne donc le domaine des méthodes de détection directe, sans marquage des événements biologiques ou chimiques.

De nombreux documents décrivent des capteurs à détection gravimétrique à base d'oscillateurs NEMS/MEMS.

On peut ainsi citer des travaux dans lesquels a été utilisé un capteur de masse sous la forme d'une poutre bi-encastrée en carbure de silicium, mise en vibration par transduction magnétostatique.

Dans l'ensemble de la description, on entendra par poutre, une pièce allongée, sensiblement horizontale, dont l'épaisseur et la largeur sont du même ordre de grandeur (ratio compris entre environ 0,8 et 1,2), lesquelles sont relativement faibles par rapport à la longueur de la poutre.

Ce capteur a permis de détecter et de peser des atomes de Xénon, déposés sous vide élevé (10⁻¹⁰Torr) et à très basse température (4,2°K), à la surface du capteur. Un tel capteur présente une résolution de l'ordre de sept zeptogrammes (zg) et une sensibilité massique de l'ordre de 0,96 Hz/zg.

Les conditions très contraignantes de fonctionnement de ce capteur rendent difficile, voire impossible, son exploitation à des fins biologiques car la transduction magnétostatique est faible en milieu aqueux et le vide poussé est incompatible avec des mesures *in vivo.*

On connaît également quelques travaux concernant la détection gravimétrique avec des oscillateurs électromécaniques opérant en milieu aqueux. On peut ainsi citer l'article de T. Adrega et al., "Resonance of electrostatically actuated thin-film amorphous silicon microelectromechanical systems microresonators in aqueous solutions: Effect of solution conductivity and viscosity", J. Appl. Phys. 2007, 101, 094308. Cet article décrit une poutre bi-encastrée mise en vibration hors-plan, et dont la fréquence de résonance est mesurée par le biais d'une détection optique. Le facteur de qualité d'une telle structure est relativement faible puisqu'il est de l'ordre de 3, compte tenu du volume de liquide qui est déplacé par la structure mise en mouvement et de la sollicitation mécanique importante des points d'ancrage. Par ailleurs, cette structure est encombrante car la poutre bi-encastrée se présente sous la forme d'un pont sous lequel est disposée une électrode d'actionnement. Cet encombrement est encore augmenté par la présence des moyens de détection, en l'occurrence, une source laser et une photodiode.

On citera encore des travaux concernant la mise en oeuvre d'un oscillateur électromécanique de type poutre en porte-à-faux. Les résultats de ces travaux sont expliqués en détail dans l'article de J. Teva et al., "A femtogram resolution mass sensor platform based on SOI electrostatically driven resonant cantilever. Part II: Sensor calibration and glycerine evaporation rate measurement", Ultramicroscopy 2006, 106, 808-814. Une microgoutte de glycérine est déposée avec précision sur cet oscillateur, puis des mesures de fréquence de résonance sont effectuées pour suivre la vitesse d'évaporation de la goutte. Cette méthode qui consiste à extraire une variation de masse à partir d'une mesure de fréquence, nécessite une étape de calibrage préalable de la sensibilité massique à partir de billes en latex.

On ne peut pas considérer que l'oscillateur est placé dans un milieu liquide lors de la mesure, puisque seule une goutte est déposée à l'extrémité de l'oscillateur, le reste du détecteur étant maintenu en milieu sec. L'utilisation du dispositif décrit dans cet article de Teva n'a donc jamais été validée en milieu aqueux. L'utilisation d'un tel oscillateur à des fins biologiques n'est donc pas envisageable car il est nécessaire, dans ce cas, d'extraire une cinétique de réaction en temps réel et donc, en général, en milieu aqueux.

On peut enfin citer d'autres travaux qui ont consisté à intégrer une solution biologique à analyser au sein même de l'oscillateur. Ces travaux sont expliqués en détails dans l'article de S. Manalis et al., "Weighing of biomolecules, single cells and single nanoparticles in fluid", Nature 446, Apr 26 2007, (7139): 1066-1069.

L'oscillateur se présente sous la forme d'une poutre en porte-à-faux dans laquelle est prévue une veine fluidique isolée de manière étanche du milieu dans lequel l'oscillateur, dont elle fait partie, est actionné. Cet oscillateur est mis en vibration par couplage électrostatique à 220 kHz et sous un vide poussé, tandis que la solution biologique à analyser circule au sein de la veine fluidique intégrée. Dans cette configuration, un facteur de qualité de 15000 est obtenu, et reste invariable selon que les canaux soient remplis d'air ou de liquide. Ces travaux ont permis de suivre la cinétique de réaction d'une reconnaissance anticorps-antigènes, pour une concentration en antigènes de 100 ng.ml⁻¹, ce qui place ce type de dispositif au même rang que les meilleures balances à quartz en termes de résolution.

Ces travaux présentent cependant des limites, résidant notamment dans la méthode de détection employée. En effet, elle met en oeuvre une détection optique à l'aide d'un laser et d'une photodiode externe, lesquels contribuent à l'encombrement global du système.

Il résulte de cette présentation qu'il n'existe à ce jour aucun dispositif pour la détection gravimétrique mettant en oeuvre un oscillateur NEMS/MEMS économique, permettant une détection de particules en milieu liquide, dans des conditions compatibles avec des analyses biologiques, présentant un facteur de qualité élevé et un encombrement réduit. US 5 744 902 A, EP 1 059 521 A, WO 00/20850 A, US 5 306 644 A, US 2007/119232 A1, WO 2007/148522 A1, US 5 920 007 A, US 5 349 844 A et US 2004/016297 A1 décrivent chacun des dispositifs pour la détection gravimétrique.

L'invention a pour objet de pallier ces inconvénients en proposant un dispositif pour la détection gravimétrique de particules en milieu fluide assurant à la fois un facteur de qualité important, des conditions d'utilisation facilitées, un encombrement réduit et un coût de production faible.

A cette fin, l'invention a pour objet un dispositif pour la détection gravimétrique de particules en milieu fluide, selon la revendication indépendante 1. Les modes particuliers de réalisation de l'invention sont définis dans les revendications dépendantes.

Dans l'ensemble de la description, on entendra par oscillateur plan, une plaque présentant une longueur et une largeur importantes par rapport à son épaisseur (ratio supérieur à 2), la longueur et la largeur étant du même ordre de grandeur préférentiellement.

Selon d'autres caractéristiques de l'invention :
- le dispositif comprend deux cavités et deux canaux indépendants, chacune des cavités faisant partie intégrante d'un desdits canal pour le passage du fluide sur chacune des faces de l'oscillateur ;
- l'oscillateur électromécanique présente une forme polygonale à plusieurs sommets, de préférence un carré ;
- lesdits moyens d'actionnement se présentent sous la forme d'au moins une électrode disposée dans le même plan que celui de l'oscillateur électromécanique, et à une distance déterminée de l'oscillateur ;
- l'oscillateur peut être de forme carrée et présenter une largeur et une épaisseur telles que le rapport de la largeur sur l'épaisseur est compris entre environ 10 et 30, et de préférence environ 10 ;
- l'oscillateur est un polygone et les moyens de support peuvent être disposés à au moins un sommet de l'oscillateur
- dans le cas d'un l'oscillateur électromécanique carré, les moyens de support peuvent être disposés aux quatre sommets dudit oscillateur ;
- les moyens de support peuvent se présenter sous la forme de pièces massives, telles que des pavés ;
- à chaque sommet de l'oscillateur, les moyens de support peuvent comprendre une fourche comprenant un manche et deux dents, orientés dans le prolongement d'une diagonale de l'oscillateur passant par ledit sommet, les dents étant reliées à une pièce massive ;
- à chaque sommet de l'oscillateur, les moyens de support peuvent comprendre une poutre orientée dans le prolongement d'une diagonale de l'oscillateur passant par ledit sommet, la poutre étant reliée à une pièce massive ;
- ledit oscillateur électromécanique peut être obtenu à partir d'un substrat métallique ;
- ledit oscillateur électromécanique peut être obtenu à partir d'un substrat polycristallin ;
- ledit oscillateur électromécanique peut être obtenu à partir d'un substrat monocristallin ;
- le substrat peut être à base de silicium.
- ledit substrat monocristallin peut être orienté selon le plan cristallographique (100) ou, alternativement, selon le plan cristallographique (110).
- au moins une desdites faces de l'oscillateur plan peut être au moins partiellement recouverte d'éléments de reconnaissance moléculaire ; et/ou
- au moins une des deux cavités et/ou le ou les canaux contient des piliers dont la section transversale est de forme prise parmi un cercle, une ellipse, et un polygone.

Ce dispositif peut, notamment, être utilisé pour la formation d'un diagnostic au chevet même du malade, le suivi en temps réel de paramètres physiologiques dans le cas d'une implantation in-vivo (par exemple : dosage de l'hémoglobine glycosylée HbA1c pour le traitement du diabète et prévenir ou stopper l'évolution des complications oculaires, rénales et neurologiques), ou pour la détection d'espèces toxiques et pathogènes dans l'air ou dans l'eau.

L'invention se rapporte également à un procédé de réalisation d'un dispositif précédent, selon la revendication indépendante 14.

L'invention se rapporte également à une méthode de détection gravimétrique de particules en milieu fluide, mise en oeuvre avec un oscillateur électromécanique plan, selon la revendication indépendante 15. Selon d'autres caractéristiques de l'invention:
- la méthode peut comprendre une étape e) de récupération et de traitement de données de détection générées aux étapes c) et d) ;
- la fréquence de vibration initiale peut être une fréquence de résonance de l'oscillateur ;
- le mode vibratoire est pris dans le groupe constitué par le mode vibratoire de Lamé, et le mode vibratoire d'extension volumique.
- la méthode peut mettre en oeuvre un oscillateur carré et quatre électrodes disposées chacune en regard de l'un des côtés de l'oscillateur, la mise en vibration de l'oscillateur prévue à l'étape b), pouvant être précédée d'une étape b1) dans laquelle au moins deux électrodes consécutives sont alimentées en champ sinusoïdal en opposition de phase et à une fréquence déterminée (f) caractéristique des particules à détecter ;
- l'étape b1) peut être précédée d'une étape b0) dans laquelle le flux de fluide est arrêté ; et/ou
- la méthode peut comprendre une étape a0) préalable à l'étape a), dans laquelle au moins une surface dudit oscillateur est recouverte au moins partiellement par des éléments de reconnaissance moléculaire.

Enfin, l'invention se rapporte à une méthode de détermination de cinétique d'interaction entre une molécule et un élément de reconnaissance moléculaire complémentaire utilisant la méthode de détection gravimétrique précédente, et comprenant une étape d') de détection d'une nouvelle modification de la fréquence correspondant à un retour à la valeur de la fréquence initiale de l'oscillateur, cette étape d') étant réalisée après l'étape d).

D'autres caractéristiques de l'invention seront énoncées dans la description détaillée ci-après faite en référence aux figures qui représentent, respectivement :
- la figure 1, une vue schématique en perspective d'une partie d'un détecteur gravimétrique selon l'invention, dans lequel l'oscillateur de type plaque est autoporté à l'intersection de deux canaux ;
- la figure 2, une vue schématique en coupe du détecteur de la figure 1 selon la ligne II-II ;
- la figure 3, une vue schématique en plan d'un détecteur selon l'invention muni de moyens de suspension de l'oscillateur selon un premier mode de réalisation ;
- la figure 4, une vue schématique en perspective d'un détecteur selon l'invention muni de moyens de suspension de l'oscillateur selon un deuxième mode de réalisation ;
- les figures 5 à 14, des vues schématiques de substrats pour un mode de fabrication préféré d'un détecteur selon l'invention à différentes étapes de la réalisation ;
- la figure 15, une vue schématique en perspective d'un détecteur selon l'invention ;
- la figure 16, une vue schématique en perspective d'un agrandissement du détecteur de la figure 15 duquel a été retiré le capot transparent ;
- la figure 17, une représentation schématique de la commande des électrodes pour la mise en oeuvre d'une méthode de détection gravimétrique selon l'invention ;
- la figure 18, un graphique illustrant la sensibilité massique théorique d'un détecteur selon l'invention, en fonction de la largeur de l'oscillateur et du rapport de cette largeur sur l'épaisseur dudit oscillateur ; et
- la figure 19, une vue schématique d'un détecteur selon l'invention obtenu par un mode de fabrication économique.

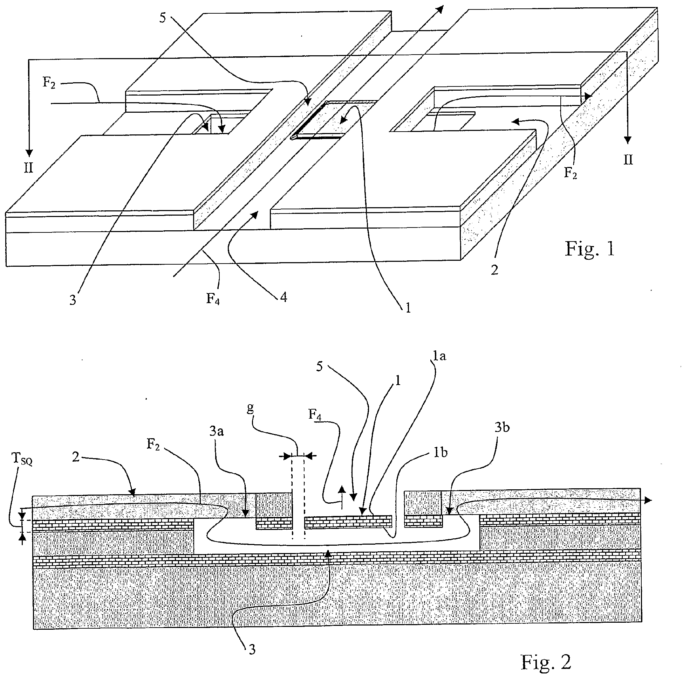

En référence à la figure 1, un dispositif de détection gravimétrique selon l'invention comprend un oscillateur électromécanique plan 1 au dessus duquel est disposée une cavité 5 faisant partie intégrante d'un canal 4 pour que du fluide circulant dans ce canal 4 selon la flèche F₄ entre en contact avec la face 1a (voir figure 2) de l'oscillateur 1.

Une deuxième cavité 3 est disposée en dessous de l'oscillateur 1 pour lui permettre de vibrer. Dans ce mode de réalisation, la cavité 3 fait partie intégrante d'un autre canal 2, indépendant du canal 4, en pour que du fluide circulant dans ce canal 2 selon la flèche F₂ entre en contact avec la face 1b (voir figure 2) de l'oscillateur 1. Selon un autre mode de réalisation, non illustré, la cavité 3 peut ne pas faire partie intégrante d'un canal indépendant du canal 4. Elle est cependant en communication fluidique avec le canal 2 du fait de la structure du dispositif de détection qui sera décrite par la suite.

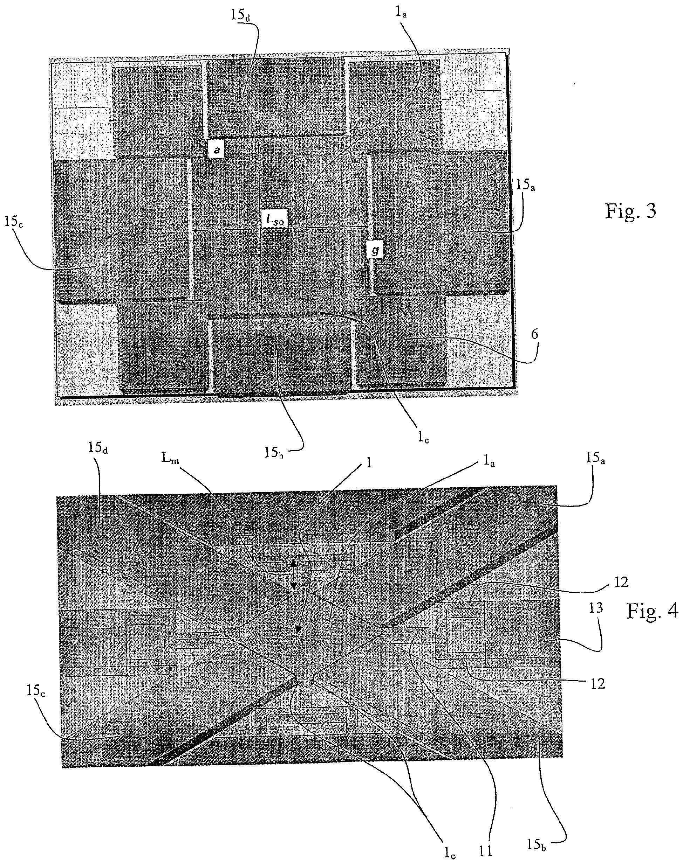

Afin de pouvoir vibrer dans son plan et au dessus de la cavité 3, le dispositif comprend des moyens de support de l'oscillateur et des moyens d'actionnement (voir figure 3).

Selon l'invention, l'oscillateur électromécanique plan est une plaque de forme polygonale. Selon un mode préféré de réalisation, l'oscillateur électromécanique est de forme carrée et présente une largeur L_{sq} (voir figure 3) et une épaisseur T_{sq} (voir figure 2) telles que le rapport de la largeur sur l'épaisseur L_{sq}/T_{sq} soit compris entre 10 et 30, de préférence 10. De cette manière, la plaque présente un comportement vibratoire différent d'une membrane.

Dans les modes de réalisation illustrés en figures 3 et 4, les moyens de support sont répartis aux quatre sommets de l'oscillateur 1. Ces moyens de support peuvent se présenter sous la forme de pièces massives telles que des pavés 6 (figure 3), ou sous la forme d'une fourche 10 comprenant un manche 11 et deux dents 12, orientés dans le prolongement de la diagonale de la plaque carrée passant par ledit sommet, les dents 12 de la fourche étant reliées à une pièce massive 13. La longueur Lₘ du manche 11 de la fourche est choisie de telle sorte que le manche puisse vibrer de préférence en extension longitudinale, alternativement en flexion latérale, lorsque l'oscillateur vibre, de préférence à une fréquence de résonance de l'oscillateur (mode de Lamé, mode d'extension volumique, ou « verre à vin » s'il s'agit d'un anneau ou d'un disque par exemple).

Alternativement, un autre moyen de suspension qui n'est pas représenté sur les figures 3 et 4 consiste en une poutre orientée dans le prolongement d'une diagonale de la plaque passant par un de ses sommets (s'il s'agit d'un polygone), la poutre étant reliée à une pièce massive.

La largeur "a" de contact entre les pavés 6 ou les manches 11 et la plaque 1 est choisie pour soutenir solidement la plaque, tout en altérant le moins possible la vibration de la plaque selon les modes vibratoires souhaités. Pour ce faire, le dimensionnement respecte la condition suivante : a≤L_{sq}/10.

Les moyens d'actionnement sont actionnés et agencés par rapport à l'oscillateur pour que celui-ci puisse entrer en vibration, dans son plan, selon un mode de vibration déterminé. Selon la manière dont sont activés les moyens d'actionnement, l'oscillateur peut vibrer selon différents modes, tels que le mode de Lamé, le mode d'extension volumique ou le mode dit « du verre à vin », en particulier pour un oscillateur circulaire ou annulaire.

Selon un mode préféré de l'invention, les moyens d'actionnement comprennent quatre électrodes 15a, 15b, 15c et 15d disposées autour de l'oscillateur 1, chaque électrode étant disposée dans le même plan que celui de l'oscillateur, au regard de chacun des côtés de l'oscillateur 1 et à une distance déterminée g (voir figure 3). La distance g doit être aussi petite que possible. Sa valeur est limitée principalement par la résolution des outils de lithographie et l'épaisseur T_{SQ} de l'oscillateur 1 (typiquement g est de l'ordre de T_{SQ}/10 et supérieur à 100nm). Grâce à cette conformation, l'oscillateur est maintenu suspendu au dessus de la cavité 3. Du fait de la présence de cette distance g, la cavité 3 est en communication fluidique avec le canal 2 sans en faire partie intégrante.

L'oscillateur 1 peut être mis en vibration, dans son plan, par couplage électrostatique, par l'intermédiaire d'au moins une des quatre électrodes 15a à 15d, ou, dans un mode préféré, de deux électrodes adjacentes. Ce faisant, le détecteur gravimétrique selon l'invention présente un coefficient de qualité élevé (de l'ordre de 100 en milieu liquide, voire davantage) puisque le volume de fluide déplacé lors de la vibration est plus faible en comparaison avec celui qui serait déplacé par un dispositif comportant une poutre encastrée ou en porte à faux vibrant selon un mode de flexion verticale.

L'oscillateur 1 peut également être mis en vibration hors de son plan et selon un mode de flexion. Cependant, une telle mise en oeuvre diminuera le facteur de qualité de l'oscillateur.

Afin de miniaturiser les différents éléments du dispositif de détection gravimétrique selon l'invention, il est souhaitable de les réaliser à l'aide de techniques de micro ou nanostructuration d'un substrat, ce dernier pouvant être constitué soit d'une couche de polysilicium déposée sur un oxyde thermique, soit d'un substrat de SOI (Silicon On Isolator). Ce dernier substrat est constitué de deux couches de silicium monocristallin entre lesquelles est disposée une couche de dioxyde de silicium (SiO₂).

Dans la suite de la présente description, les exemples de réalisation seront décrits pour un dispositif de détection gravimétrique usiné sur des substrats SOI orientés selon le plan cristallographique (100). Alternativement, les substrats SOI utilisés peuvent être orientés selon le plan cristallographique (110). L'un des avantages de cette technologie repose sur la plus faible sujétion aux mécanismes de dissipation mécanique que celle des matériaux polycristallins (par exemple le polysilicum) dans lesquels sont souvent observés des phénomènes de relaxation des joints de grain.

Ainsi, lorsque qu'un substrat SOI est utilisé, l'oscillateur est fabriqué pour que les flancs 1c de la plaque 1 et les électrodes 15a à 15d présentent une orientation cristallographique selon la direction cristallographique <110>. Les flancs du manche et des deux dents de chaque fourche des moyens de suspension présentent, alors, une orientation selon la direction cristallographique <100>.

La réalisation d'un dispositif de détection gravimétrique selon l'invention consiste, d'une manière générale, à :
- sélectionner un substrat approprié pour la réalisation d'un oscillateur plan apte à vibrer sensiblement dans son plan,
- réaliser un oscillateur électromécanique sous forme d'une plaque,
- réaliser une première cavité 3, faisant éventuellement partie intégrante d'un canal 2 pour le passage du fluide sur la face 1b de l'oscillateur, puis réaliser une deuxième cavité 5 faisant partie intégrante d'un canal 4, indépendant de l'éventuel canal 2, de manière à permettre le passage du fluide sur l'autre face 1a de l'oscillateur 1, l'oscillateur étant suspendu entre les deux cavités 3 et 5.

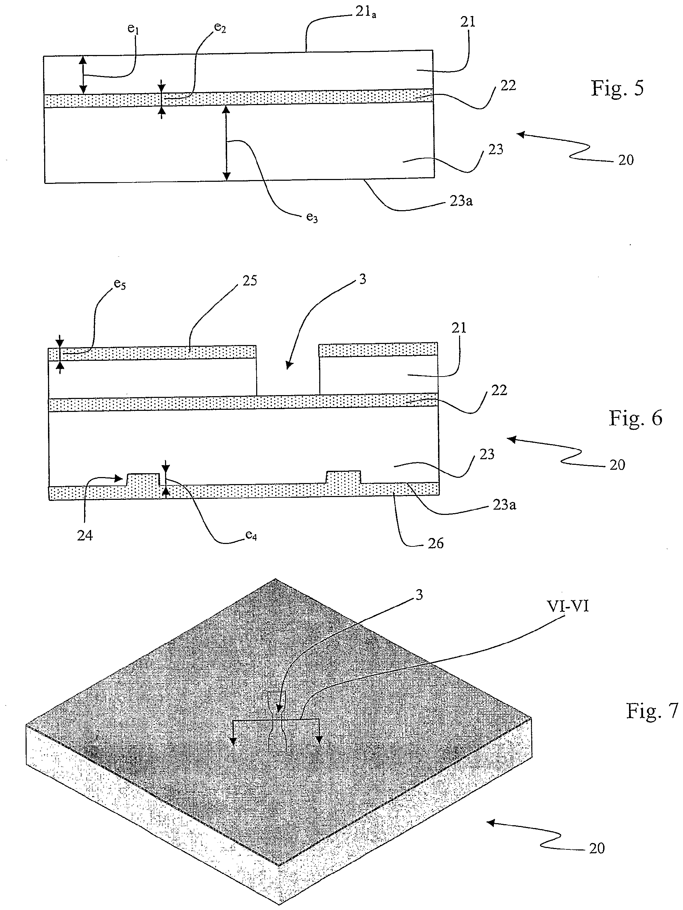

Un mode préféré de réalisation consiste à fabriquer le dispositif de détection gravimétrique selon l'invention à l'aide de deux substrats SOI. Cet exemple de réalisation est illustré dans les figures 5 à 14.

Le premier substrat SOI 20 illustré en figure 5 comprend une couche supérieure 21, de préférence en silicium monocristallin hautement résistif (ρ>1k*'*Ω.cm), d'une épaisseur e₁ supérieure à 5 micromètres (comprise entre 5 à 10 micromètres préférentiellement). Sous cette couche 21, est disposée une couche 22 de SiO₂ enterrée d'une épaisseur e₂ de l'ordre de 2 à 3 micromètres préférentiellement. Sous cette couche 22 de SiO₂, est disposée une couche inférieure 23 de silicium monocristallin, dite "poignée inférieure", de préférence hautement résistif. Cette poignée 23 présente une épaisseur e₃ de l'ordre de 500 à 750µm préférentiellement.

Une première étape facultative du procédé consiste à réaliser des marques d'alignement 24 en face arrière de la poignée inférieure, ces marques permettant un alignement plus précis des deux substrats SOI, comme il sera décrit par la suite.

Pour ce faire, une couche de protection (aluminium, silicate d'aluminium, oxyde de silicium, etc.) est déposée sur la face extérieure 21a de la couche 21 de silicium. Puis, une résine photosensible est étalée sur la face extérieure 23a de la poignée 23 et une photolithographie des marques d'alignement est réalisée à l'aide d'un masque. La couche de résine photosensible est retirée au niveau des marques, et la couche de silicium de la poignée est ensuite gravée sur une épaisseur déterminée e₄ (figure 6). Ensuite, la couche de résine photosensible est retirée de la face extérieure 23a de la poignée à l'aide d'un plasma O₂ et/ou d'une solution chimique adaptée.

Une deuxième étape consiste à réaliser la cavité 3. La couche de protection en face extérieure 21a est retirée et une oxydation thermique du substrat est réalisée sur la face extérieure 21a et la face extérieure 23a. Cette oxydation thermique aboutit à la réalisation d'une couche 25 de SiO₂ sur la face extérieure 21a et d'une couche 26 de SiO₂ sur la face extérieure 23a, ces deux couches présentant une épaisseur e₅ d'environ 2 à 3 micromètres préférentiellement. La couche 25 servira au scellement avec le deuxième substrat SOI et permettra l'isolation verticale des futures parties actives (électrode, oscillateur et ses moyens de suspension) par rapport au substrat 20.

Puis une résine photosensible est étalée sur la face extérieure 21a, et la cavité 3, au-dessus de laquelle sera suspendu le futur oscillateur, est définie par photolithographie dans cette couche de résine photosensible.

A l'aplomb des motifs ainsi obtenus, la couche d'oxyde 25 est ensuite gravée par un procédé de gravure sèche jusqu'à la couche 21 de silicium monocristallin. Cette dernière est alors également gravée, à l'aide d'un procédé par gravure sèche, jusqu'à la couche 22 de SiO₂ enterrée. Enfin, la résine photosensible est retirée (figure 6) et le substrat est nettoyé par une solution chimique dédiée.

La figure 7 montre en perspective le premier substrat 20 après réalisation de la cavité 3. La figure 6 est une représentation de la coupe VI-VI de la figure 7. Dans cet exemple, la cavité présente une longueur suffisante pour qu'elle puisse être intégrée au canal 2 dans une étape ultérieure.

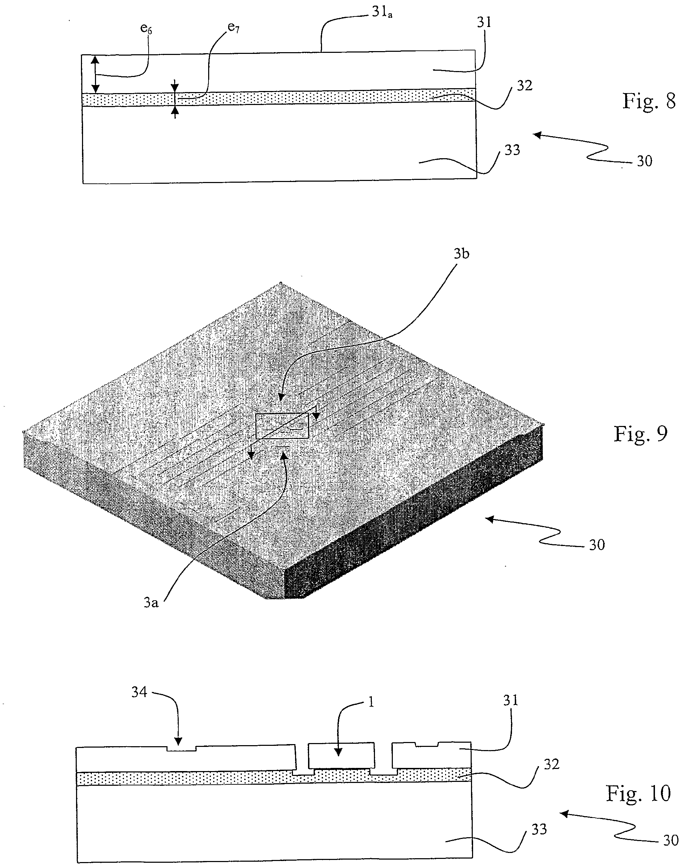

Une troisième étape, illustrée dans les figures 8 à 10, consiste à fabriquer les parties actives du dispositif, à savoir l'oscillateur sous forme de plaque et les électrodes, ainsi que les moyens de support. Au moins l'un des moyens de support peut être relié à un plot de contact permettant la polarisation électrique de l'oscillateur. Ces éléments sont fabriqués dans un deuxième substrat SOI 30.

Celui-ci comprend une couche supérieure 31 de silicium monocristallin fortement dopé de type P ou N, préférentiellement orienté selon le plan cristallographique (100). Cette couche supérieure 31 présente une épaisseur e₆ de l'ordre 0,2 à 10 micromètres. Sous cette couche supérieure, est disposée une couche 32 de SiO₂ enterrée d'une épaisseur e₇ de l'ordre de 2 à 3 micromètres préférentiellement. Enfin, une poignée inférieure 33 en silicium orienté selon le plan cristallographique (100) est disposée sous la couche 32 de SiO₂.

Selon un premier mode de réalisation, cette troisième étape comprend les étapes élémentaires suivantes :
α1) la face extérieure 31a de la couche 31 de silicium dopé subit une oxydation thermique dont la durée détermine l'épaisseur de SiO₂. Cette durée est ajustée en fonction de l'épaisseur de couche de silicium dopé à graver pour définir les parties actives ; préférentiellement, l'épaisseur de la couche de silicium à graver 31 est de l'ordre de 10 fois l'épaisseur du masque en SiO₂ déposé.
α2) une résine photosensible est étalée sur la face extérieure 31a et des marques d'alignement 34, qui serviront pour l'opération de scellement et la lithographie des parties actives, sont réalisées par photolithographie.
α3) les motifs sont transférés par gravure sèche dans la couche d'oxyde thermique et dans une partie de la couche 31 de silicium dopé.
α4) le reste de la résine photosensible est retiré à l'aide d'un plasma O₂ et/ou d'une solution chimique adaptée.
α5) une nouvelle couche de résine photosensible (ou, alternativement, électrosensible) est déposée sur la couche d'oxyde thermique, et les motifs, correspondant à l'oscillateur 1, aux moyens de suspension et aux électrodes de transduction, sont réalisés par photolithographie (ou lithographie électronique alternativement).
α6) la couche d'oxyde thermique est gravée par gravure sèche par plasma avec arrêt sur la couche de silicium dopé.
α7) la couche 31 de silicium dopé est gravée avec arrêt sur la couche enterrée d'oxyde de silicium 32 (par un procédé de gravure sèche employant des cycles alternés de gravure du silicium et de passivation des flancs). On obtient alors l'oscillateur 1, les moyens de suspension et les électrodes de transduction dans un même plan, celui de la couche 31 de silicium dopé.
α8) le reste de la résine photosensible est retiré à l'aide d'un plasma O₂ et/ou d'une solution chimique adaptée.
α9) le reste de la couche d'oxyde thermique est retiré préférentiellement par attaque chimique (BOE), ce qui entame également en partie la couche 32 de SiO₂ enterrée.
α10) le substrat est nettoyé en vue du scellement avec le premier substrat 20 par le biais d'une solution chimique adaptée.

Ces étapes aboutissent au substrat 30 structuré illustré aux figures 9 et 10. Le détail encadré de la figure 9 correspond à la structure de la figure 4 avant métallisation des électrodes.

Un deuxième mode de réalisation de cette troisième étape comprend les étapes élémentaires suivantes :
β1) une résine photosensible est étalée en face extérieure 31a et des marques d'alignement sont obtenues par photolithographie.
β2) les motifs sont transférés par gravure sèche dans une partie de la couche de silicium dopé.
β3) le reste de la résine photosensible est retiré à l'aide d'un plasma O₂ et/ou d'une solution chimique adaptée.
β4) une résine photosensible ou électrosensible, est étalée et des motifs sont obtenus par, respectivement, photolithographie ou lithographie électronique.
β5) la couche de silicium dopé est gravée par gravure sèche avec arrêt dans la couche d'oxyde de silicium enterré.
β6) le reste de la résine est retiré à l'aide d'un plasma O₂ et/ou d'une solution chimique adaptée.
β7) le substrat est nettoyé en vue du scellement avec le premier substrat par le biais d'une solution chimique dédiée.

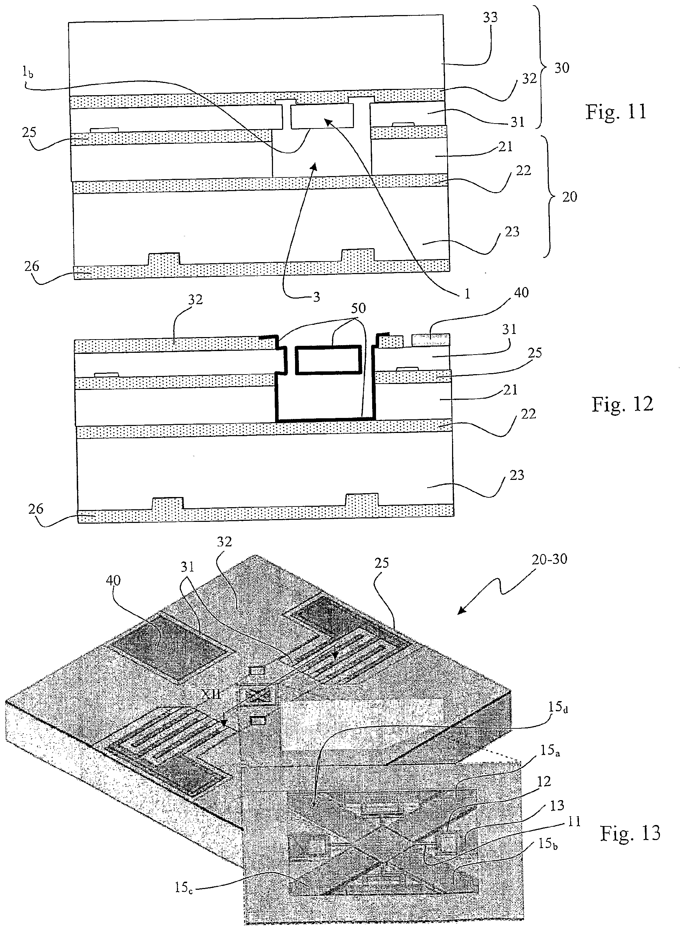

Une fois que ces substrats 20 et 30 ont été structurés, ils sont positionnés à l'aide des marques d'alignement 24-34 puis scellés l'un sur l'autre, la face extérieure 21a de l'un contre la face extérieure 31a de l'autre (figure 11). La couche 33 de silicium monocristallin du deuxième substrat 30 est amincie puis polie (polissage mécano-chimique et finition éventuelle dans une solution de tétraméthylammonium hydroxyde) avec arrêt sur la couche 32 de SiO₂ enterrée. Dans un mode de réalisation alternatif, la couche 33 de silicium peut être amincie partiellement.

Par la suite, à l'aide de techniques de photolithographie et de gravure connues, la couche 32 de SiO₂ enterrée est retirée par endroits afin de pouvoir reprendre ultérieurement des contacts électriques sur la couche de silicium 31 et polariser les parties actives. Cette étape permet également le dégagement du SiO₂ pour créer des accès 3a et 3b entre la cavité 3 et le canal 2. A l'issue de la gravure du SiO₂, le reste de la résine est retiré à l'aide d'un plasma O₂ et/ou d'une solution chimique adaptée.

Une couche métallique 40 est ensuite déposée sur la couche 31 de silicium dopée, et retirée de manière sélective à l'aide de techniques de photolithographie et de gravure connues, afin de constituer des plots de reprise de contact métallique sur la couche 31 de silicium dopée en périphérie de la puce, c'est-à-dire de manière déportée des zones qui seront en contact avec le liquide, confiné quant à lui par les canaux 2 et 4.

Une couche isolante électrique 50 (Al₂O₃, HFO₂, SiO₂, etc.) est également déposée sur les parties qui seront destinées à entrer en contact avec le fluide.

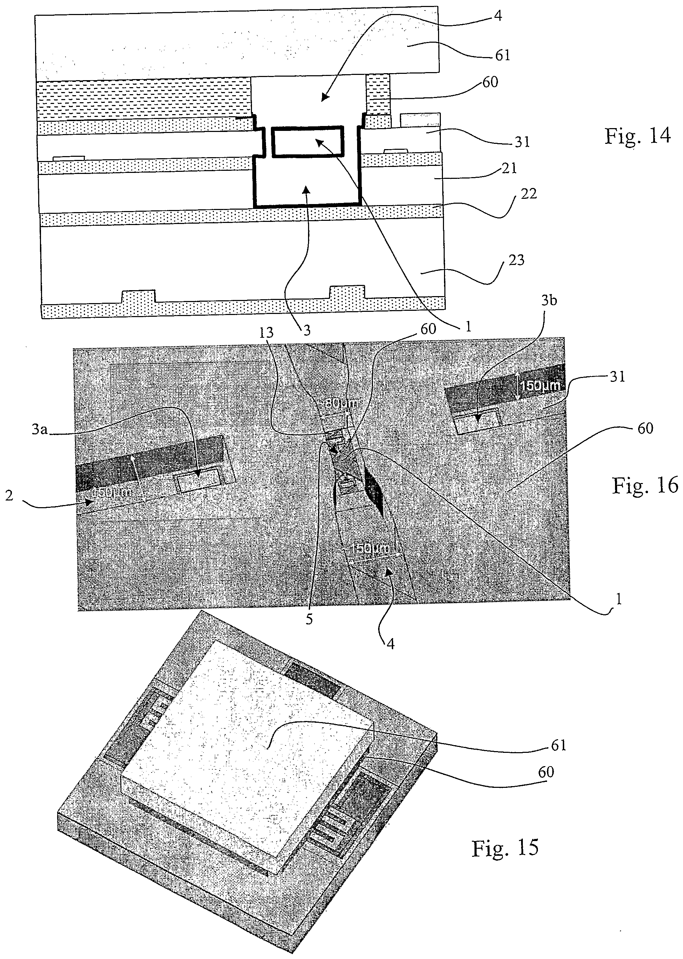

La structure ainsi obtenue (figures 12 et 13) est recouverte partiellement, par un procédé de sérigraphie de colle, par une couche 60 dans laquelle est gravé le canal 4, cette couche 60 étant surmontée d'un capot 61 (figures 14 et 15), en Pyrex® ou en verre. Le détail de la figure 13 correspond à une structure semblable à celle de la figure 4 mais sur laquelle l'oscillateur, les suspensions et les électrodes sont recouverts de la couche isolante 50.

La couche 60, qui comprend le canal 4, peut être constituée, soit par du silicium hautement résistif, soit par un film photosensible biocompatible. L'assemblage d'une part, de la structure 20-30 portant l'oscillateur 1 et de la couche 60 portant le canal 4 (figure 16) et d'autre part, du capot 61 en Pyrex® (éventuellement usiné préalablement), permet d'aboutir au dispositif de détection gravimétrique selon l'invention (figure 15).

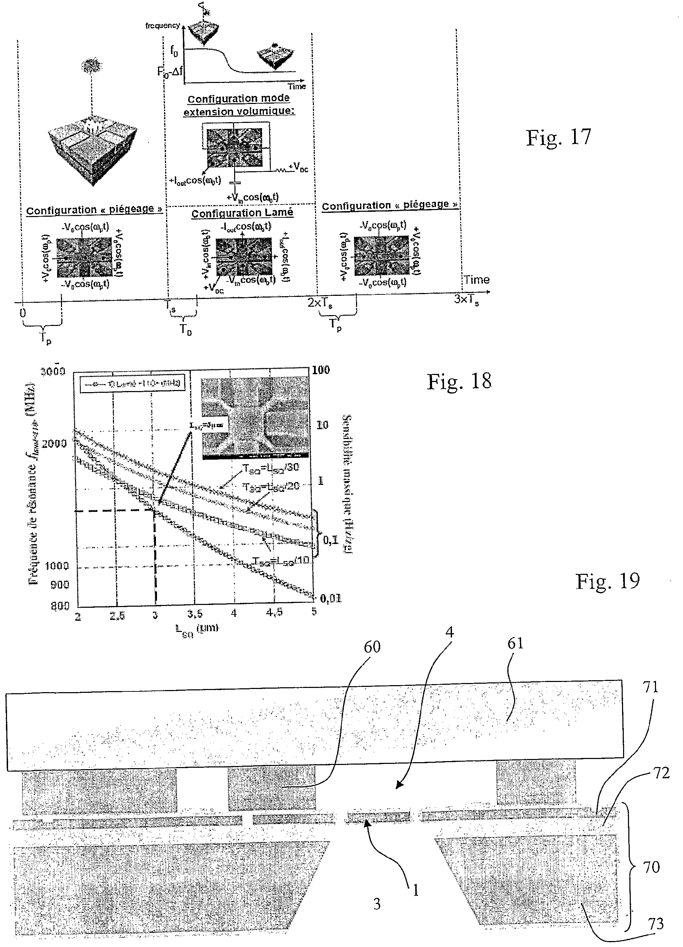

Un procédé de fabrication alternatif consiste à réaliser deux cavités dont une seule fait partie intégrante d'un canal. Un exemple d'un tel procédé est décrit ci-après, en référence à la figure 19. Il présente l'avantage d'être économique puisqu'il est préférentiellement réalisé avec un seul substrat SOI 70 à partir duquel seront fabriquées les parties actives du dispositif, à savoir l'oscillateur sous forme de plaque, les électrodes, ainsi que les moyens de support. Au moins l'un des moyens de support peut être relié à un plot de contact permettant la polarisation électrique de l'oscillateur.

Ce substrat SOI 70 comprend une couche supérieure 71 de silicium monocristallin fortement dopé de type P ou N orienté selon le plan (100) préférentiellement. Cette couche supérieure présente une épaisseur de l'ordre 0,2 à 10 micromètres préférentiellement. Sous cette couche supérieure, est disposée une couche de SiO₂ enterrée 72 d'une épaisseur de l'ordre de 2 à 3 micromètres préférentiellement. Enfin, une poignée inférieure 73, en silicium orienté selon le plan (100), est disposée sous la couche de SiO₂ enterrée.

Une première étape, facultative, consiste à réaliser des marques d'alignement par photolithographie et gravure sèche dans la couche supérieure 71 de silicium.

Puis, une résine de protection est déposée sur la couche de silicium dopé 71.

On réalise ensuite une lithographie pour définir les motifs délimitant les parties actives (oscillateur, électrodes, etc.). Ces motifs sont transférés par gravure sèche (par un procédé employant des cycles alternés de gravure du silicium et de passivation des flancs) dans la couche de silicium dopé 71 avec arrêt dans la couche d'oxyde de silicium enterré 72. On obtient alors l'oscillateur 1, les moyens de suspension et les électrodes de transduction dans un même plan, celui de la couche 71 de silicium dopé. La résine de protection est ensuite retirée, à l'aide d'un plasma O₂ et/ou d'une solution chimique adaptée.

Un oxyde HTO (High Temperature Oxide) est ensuite déposé par technique LPCVD (Low Pressure Chemical Vapor Déposition), recouvrant ainsi les deux faces du substrat SOI 70 et remplissant les entrefers formés lors de la gravure précédente de la couche de silicium dopé 71. L'épaisseur de cet oxyde HTO est supérieure à 500nm préférentiellement.

Une nouvelle étape de lithographie et gravure de la couche d'oxyde HTO avec arrêt sur la couche de silicium dopé 71 permet de définir les motifs de reprise de contact électrique qui se trouveront en périphérie du dispositif, et déportés des parties qui doivent se trouver en contact avec le liquide, puis la résine utilisée pour la lithographie est retirée.

La face avant du substrat SOI (face libre de la couche d'oxyde HTO et parties libres de la couche silicium 71) est ensuite recouverte d'une couche conductrice d'AISi de 2µm d'épaisseur au moins, déposée par pulvérisation.

Une étape de photolithographie est alors mise en oeuvre pour définir le masque permettant l'obtention des électrodes. Après exposition à une lumière et retrait des zones exposées de la résine, la couche d'AISi est retirée localement par gravure chimique. Après retrait de la résine de protection, un oxyde d'environ 4.25 µm d'épaisseur de type TEOS est déposé par voie PECVD (Plasma Enhanced Chemical Vapor Déposition) sur la face avant du substrat. L'oxyde TEOS désigne un oxyde de silicium (SiO2) obtenu par un dépôt chimique en phase vapeur à basse pression, à partir d'un précurseur de type tétraéthylorthosilicate (TEOS). Cette étape est ensuite suivie d'un dépôt de nitrure enrichi en silicium par voie PECVD également.

On réalise ensuite une protection de la face avant par une enduction de résine sur celle-ci, suivi d'une étape d'amincissement partiel et de polissage de la face arrière du substrat (face libre de la couche de silicium 73).

Après retrait de la résine de protection, on réalise un dépôt de nitrure enrichi en silicium sur la face arrière du substrat par voie PECVD, suivi d'une lithographie et gravure sèche du nitrure en face arrière pour réaliser une cavité 3. Une gravure KOH (Hydroxyde de potassium) avec arrêt sur la couche d'oxyde enterrée 72 permet ensuite de définir des moyens de support en oxyde SiO₂ pour supporter l'oscillateur et une partie des électrodes.

Le nitrure est ensuite gravé préférentiellement à l'aide d'une solution chimique adaptée, ou alternativement retiré en face avant du substrat par gravure sèche. L'oscillateur est ensuite défini, ou encore « libéré », par gravure de la couche d'oxyde enterré 72 au BOE (Buffered Oxide Etchant) ou HF (acide fluorhydrique) en phase vapeur.

On dépose ensuite un oxyde « high-k » (haute permittivité) par procédé ALD (Atomic Layer Déposition) : oxyde de type Al₂O₃ ou HFO₂. Enfin, de la même manière que dans le mode préféré de réalisation décrit précédemment, on recouvre ce substrat gravé 70, par un procédé de sérigraphie de colle, avec une couche 60 dans laquelle est gravé le canal 4, cette couche 60 étant surmontée d'un capot transparent 61 en verre ou Pyrex®.

La couche 60, qui comprend le canal 4, peut être constituée, soit par du silicium hautement résistif, soit par un film photosensible biocompatible.

Une méthode de détection gravimétrique de particules en milieu fluide selon l'invention consiste à mettre en oeuvre l'oscillateur électromécanique décrit précédemment.

Cette mise en oeuvre comprend les étapes suivantes (par convention, les étapes du procédé suivant sont faites dans l'ordre alphabétique) :
a) générer un flux de fluide comprenant les particules à détecter, dans le premier canal 4 pour amener du fluide au contact de l'une des faces de l'oscillateur 1 ;
b) mettre en vibration l'oscillateur 1 à une fréquence initiale et selon un mode vibratoire déterminé ;
c) détecter la fréquence de vibration de l'oscillateur 1 ;
d) détecter une modification de la fréquence par rapport à la fréquence de vibration initiale de l'oscillateur 1.

Dans le mode de réalisation illustré, le procédé comprend, en outre, l'étape a1) dans laquelle un flux de fluide, comprenant des particules à détecter, est également généré dans le second canal 2 pour amener du fluide également au contact de l'autre des deux faces de l'oscillateur.

La mise en vibration de l'oscillateur à une fréquence initiale peut être faite selon plusieurs modes vibratoires. Dans un mode préférentiel de réalisation de l'invention, pour lequel l'oscillateur serait constitué d'une plaque carrée, grâce à la disposition des électrodes en face de chaque bord de l'oscillateur et dans le même plan que la plaque, les modes vibratoires qui peuvent être exploités, avec de bons résultats, sont le mode vibratoire de Lamé et le mode vibratoire d'extension volumique (ou mode dit de respiration). Pour un oscillateur circulaire ou annulaire, le mode vibratoire préféré est le mode dit de « verre à vin ».

De préférence, la fréquence de vibration initiale est une fréquence de résonance de l'oscillateur.

Selon le mode vibratoire de Lamé, les quatre sommets de l'oscillateur et son centre constituent des noeuds de vibration (déplacement nul et perte d'énergie minimale). L'onde de cisaillement qui est associée à ce mode de vibration se propage selon les diagonales de l'oscillateur, de sorte que les déformées de deux côtés consécutifs de l'oscillateur sont déphasées de π l'une par rapport à l'autre. Il en résulte un mode isochore, ce qui permet une réduction significative des pertes thermo-élastiques à travers la structure mise en vibration, contrairement aux poutres encastrées (bi-encastrées ou en porte-à-faux) qui sont sollicitées en flexion. Autrement dit, le mode de Lamé permet une amélioration significative du facteur de qualité car les sommets de l'oscillateur carré constituent les noeuds de vibration. Ils ne subissent, ainsi, quasiment aucune contrainte mécanique lors de la vibration, de sorte que cette vibration n'est pas dissipée au reste du dispositif. Toute la vibration est concentrée sur l'oscillateur de sorte que le moindre dépôt d'une molécule sur sa surface ou retrait d'une molécule de sa surface peut être détecté.

Pour obtenir une vibration de l'oscillateur selon le mode de Lamé, au moins une électrode disposée en face d'un bord de l'oscillateur est alimentée à l'aide d'un signal alternatif *vᵢₙ*, de fréquence de résonnance *fᵢₙ* correspondant au mode de Lamé attendu. L'oscillateur est polarisé par l'intermédiaire de l'un de ses moyens de support qui est alimenté par un signal de tension continue V_{DC} dont le rôle est d'agir sur l'amplitude de la force électrostatique de mise en vibration, ainsi que sur la valeur de la fréquence de résonance de l'oscillateur. Dans un mode préférentiel, pour faire vibrer l'oscillateur selon le mode de Lamé, deux électrodes (15a et 15b par exemple), situées en face de deux bords consécutifs de l'oscillateur, sont polarisées avec le même signal *vᵢₙ*, mais déphasé de π l'une par rapport à l'autre, tandis que l'oscillateur reste polarisé à l'aide du signal de tension continue V_{DC}. La détection de la fréquence de vibration se fait préférentiellement par couplage capacitif par l'intermédiaire d'un courant *lₒᵤₜ* généré par la modulation de la capacité de transduction entre l'oscillateur mis en vibration et les électrodes situées en face des électrodes alimentées par le signal alternatif *vᵢₙ* (voir figure 17). Ainsi, le courant capacitif de sortie *lₒᵤₜ* est mesuré au moins sur l'une des électrodes 15c ou 15d qui n'est pas commandée par le signal d'excitation *vᵢₙ*. Dans un mode préféré de l'invention, ce courant *lₒᵤₜ* résulte de la somme de deux courants *lₒᵤₜ₁* et *lₒᵤₜ₂*, issus du couplage capacitif entre l'oscillateur mis en vibration et deux électrodes adjacentes 15c ou 15d qui ne sont pas alimentées par le signal alternatif *vᵢₙ*. Le courant *lₒᵤₜ₁* est inversé avant addition avec le courant *lₒᵤₜ₂*.

Dans le mode vibratoire d'extension volumique, la forme de l'oscillateur est conservée (carrée) et ses flancs vibrent en phase (dilatation et contraction) par opposition au mode de Lamé pour lequel deux côtés voisins vibrent en déphasage de π l'un par rapport à l'autre.

Pour obtenir une vibration selon le mode d'extension volumique, au moins une électrode disposée en face d'un bord de l'oscillateur est alimentée par un signal alternatif *vᵢₙ*, de fréquence de résonnance *fᵢₙ* correspondant au mode d'extension volumique attendu, se superposant à un signal de tension continue V_{DC} dont le rôle est d'agir sur l'amplitude de la force électrostatique de mise en vibration, ainsi que sur la valeur de la fréquence de résonance de l'oscillateur. Dans un mode préférentiel, pour exciter le mode d'extension volumique, on polarisera les quatre électrodes en face des bords de l'oscillateur, avec le même signal *vᵢₙ*, se superposant à un signal de tension continue V_{DC}. La détection de la fréquence de vibration se fait par l'intermédiaire d'un courant *lₒᵤₜ* détecté au niveau de l'un des moyens de support 6 (voir figure 17).

Ainsi, lorsque le fluide circule à l'intérieur des canaux, et que l'oscillateur vibre à sa fréquence de résonance, il est possible d'observer une variation importante de la fréquence de vibration lors du dépôt de particules sur l'oscillateur ou, au contraire, lorsque des particules se sont détachées de l'oscillateur et sont de nouveau en solution.

La méthode de détection gravimétrique selon l'invention comprend une étape e) de récupération et de traitement de données de détection générées aux étapes c) et d), ces données permettant de déduire, par exemple, la masse des particules qui se sont déposées sur l'oscillateur, ou qui se sont détachées de ce dernier et sont de nouveau dans le fluide.

Deux méthodes peuvent être utilisées pour améliorer la détection de particules avec le dispositif de détection selon l'invention. Ces méthodes peuvent être combinées entre elles.

Une première méthode consiste à recouvrir, dans une étape préalable a0), au moins partiellement au moins une surface de l'oscillateur avec des éléments de reconnaissance moléculaire. Ces éléments se lient spécifiquement avec les molécules que l'on souhaite détecter et permettent une détection ciblée de ces molécules dans un fluide comportant également des molécules de types différents.

Une deuxième méthode, illustrée en figure 17, est basée sur l'effet diélectrophorétique. Elle est permise par la configuration quadripolaire des électrodes du dispositif.

Ainsi, lorsque la mise en vibration de l'oscillateur prévue à l'étape b), est précédée d'une étape b1) dans laquelle au moins deux électrodes consécutives sont alimentées en champ sinusoïdal en opposition de phase et à une fréquence déterminée (*f*) caractéristique des particules à détecter, et ce pendant l'intervalle de temps [0 ; T_{S}], un phénomène de piégeage est obtenu en maintenant en "lévitation" les particules que l'on souhaite détecter au-dessus de l'oscillateur.

De préférence, deux électrodes en regard sont alimentées en champ sinusoïdal à une fréquence déterminée (f) caractéristique des particules à détecter, au même potentiel +V₀, les deux autres électrodes étant en opposition de phase, au potentiel -V₀ (configuration dite « à champ alterné »). Ce faisant, le phénomène de piégeage est obtenu au-dessus du centre de l'oscillateur.

L'étape b1) est préférentiellement précédée d'une étape b0) dans laquelle le flux de fluide dans le canal est arrêté. Cette étape b0) améliore ainsi le piégeage.

Ensuite, les électrodes sont alimentées pendant l'intervalle de temps [T_{S} ; 2T_{S}], de manière à faire vibrer l'oscillateur selon un mode vibratoire déterminé (mode de Lamé, mode d'extension volumique, mode du verre à vin s'il s'agit d'un disque ou anneau par exemple, ou autre). Durant cet intervalle, les molécules se déposent sur l'oscillateur puisqu'elles ne sont plus ni entrainées par le fluide, ni maintenues en lévitation par le courant électrique.

La méthode de détection gravimétrique selon l'invention peut être utilisée pour déterminer une cinétique d'interaction entre une molécule et un élément de reconnaissance moléculaire complémentaire. Dans ce cas, la méthode consiste, dans une étape d), à détecter une première modification de fréquence de vibration de la plaque de l'oscillateur lorsque la molécule se fixe sur l'élément de reconnaissance moléculaire disposé à la surface de la plaque, puis, dans une étape d') à détecter une nouvelle modification de la fréquence, correspondant à un retour à la valeur de la fréquence de résonance de l'oscillateur, lorsque la molécule se détache de l'élément de reconnaissance moléculaire. Cette étape d') est réalisée après l'étape d) de la méthode de détection gravimétrique.

Cette méthode de détermination de cinétique d'interaction pourra être mise à profit dans le contexte de la dynamique moléculaire pour évaluer, par exemple, les constantes d'association, dissociation entre biomolécules très variées : protéines, DNA, RNA, polysaccharides, lipides, voire virus et cellules, les interactions antigène-anticorps, anticorps-anticorps, hormone-récepteur, drogue-récepteur, enzyme-cofacteur/inhibiteur, protéine-ADN, protéine-ARN, ADN-ADN, lipoprotéine-enzyme, protéine-peptide, phages-anticorps, etc.

Le dispositif de détection gravimétrique selon l'invention présente de nombreux avantages par rapport aux dispositifs de l'état de la technique constitués par des poutres bi-encastrées ou en porte-à-faux.

Ainsi, un dispositif selon l'invention permet une plus grande latitude en ce qui concerne les dimensions de l'oscillateur. En théorie, le mode de Lamé d'une plaque de 3 µm de côté (les flancs de la plaque étant parallèles aux plans cristallographiques (110)) devrait être obtenu pour une fréquence d'environ 1,374 GHz. En comparaison, d'après la théorie d'EULER-BERNOULLI, les dimensions d'une poutre bi-encastrée sollicitée dans le plan devraient être ramenées à 640 nm de longueur sur 64 nm de largeur pour atteindre le même niveau de fréquence.

Le dispositif de détection gravimétrique selon l'invention présente également une sensibilité massique (correspondant à la variation de fréquence de vibration par unité de masse) améliorée par rapport à une poutre bi-encastrée. Ainsi, comme le montre le graphique de la figure 18, un dispositif selon l'invention comprenant un oscillateur carré ayant une largeur L_{sq} de 2 µm de côté et une épaisseur T_{sq} de 200 nm ou de 66 nm (respectivement courbes T_{sq} = L_{sq}/10 et T_{sq} = L_{sq}/30), présente une sensibilité massique, respectivement, de l'ordre de 3,47 ou 10,4 Hz/zg (HERTZ par zepto grammes). En comparaison, une poutre bi-encastrée en carbure de silicium de 2,3 µm de longueur, 70 nm d'épaisseur et 150 nm de largeur, présente une sensibilité de 0,96 Hz/zg. Ainsi, une molécule de 1 zeptogramme induit une variation de fréquence, dans cet exemple, de 3,6 à 10,8 fois supérieure avec le dispositif selon l'invention par rapport au dispositif de l'état de la technique.

Le dispositif selon l'invention permet également une réduction des pertes énergétiques par la surface de l'oscillateur. En effet, par comparaison à un système utilisant une poutre encastrée, l'oscillateur selon l'invention présente un ratio surface sur volume moins élevé. Ceci permet de réduire les pertes énergétiques à travers la surface (adsorption, désorption des molécules) qui deviennent prédominantes par rapport aux effets de volume avec la réduction de taille des systèmes.

Le dispositif de détection gravimétrique selon l'invention présente également une limite de détection améliorée par rapport aux dispositifs utilisant une poutre encastrée. Ainsi, la masse minimale détectable par un oscillateur vibrant selon un mode d'extension volumique est environ trente-deux fois plus faible que celle d'une poutre bi-encastrée de même longueur, épaisseur et matériaux structurels que l'oscillateur. Donc, à taille identique, la résolution du dispositif selon l'invention est améliorée par rapport à l'état de la technique et, à résolution identique, un dispositif selon l'invention présente des dimensions très supérieures par rapport à un dispositif en poutre bi-encastrée, ce qui permet d'utiliser une technologie de fabrication moins coûteuse.

Enfin, un dispositif selon l'invention présente une probabilité accrue de détection d'une molécule.

En effet, l'un des points critiques de la détection repose sur la concentration minimale de molécules détectables par unité de temps. Outre la géométrie du canal fluidique dans lequel circulent les molécules, la concentration minimale dépend de la surface accessible de l'oscillateur.

A titre d'exemple, une simulation a été menée avec des brins d'ADN composés de 20 nucléotides présents dans une solution en concentration équivalente à 1 fM/litre (femtomole par litre).

Avec une poutre bi-encastrée en carbure de silicium de longueur de 10µm, d'épaisseur de 260 nanomètres et de largeur de 650 nanomètres, le temps pour que la première molécule atteigne la surface de la poutre est d'environ 1 heure, alors que le temps pour que la première molécule atteigne la surface de l'oscillateur d'un dispositif selon l'invention est d'environ 6 minutes pour un oscillateur de longueur L_{SQ} de 8,25 µm (oscillateur présentant une sensibilité massique équivalente à la poutre bi-encastrée), et de 30 minutes pour un oscillateur de longueur L_{SQ} de 2,565 µm (c'est-à-dire un oscillateur présentant une masse effective équivalente à celle de la poutre bi-encastrée).

Ainsi, non seulement le dispositif de détection gravimétrique selon l'invention est plus efficace qu'une poutre bi-encastrée équivalente, mais en plus, il permet d'utiliser des techniques de structuration de taille supérieure et donc moins chère.

La structure de l'oscillateur en forme de plaque disposée entre deux cavités et autour duquel sont disposées quatre électrodes, permet une détection gravimétrique de particules dont la masse minimale détectable est d'environ trente deux fois plus faible que celle détectée à l'aide des dispositifs de l'état de la technique sous forme de poutre bi-encastrée.

En outre, la mise en oeuvre du dispositif selon l'invention peut être faite *in vivo* et ne nécessite pas un dépôt très précis des particules sur l'oscillateur. Dans ce cas la puce peut être implantée chez l'homme ou l'animal et les données sont émises par radio à un serveur externe.

D'autre part, la détection des variations de fréquence étant assurée par les électrodes situées dans le même plan que l'oscillateur, le détecteur selon l'invention permet de minimiser l'encombrement du système, notamment si une co-intégration CMOS est réalisée au moment de la fabrication de la structure mobile, permettant d'intégrer l'électronique de conditionnement (amplificateur trans-impédance, déphaseur ...) et de mise en forme du signal au voisinage de l'oscillateur

Enfin, l'oscillateur selon l'invention ne nécessite aucune étape de calibrage, contrairement au dispositif de TEVA.

Selon d'autres modes de réalisation :
▪ au moins une des deux cavités et/ou le ou les canaux contient des piliers dont la section transversale est de forme prise parmi un cercle, une ellipse, et un polygone.
   Par exemple, lesdits piliers peuvent être disposés en amont et/ou en aval de la cavité 5. En amont de l'oscillateur 1, ils peuvent servir à capturer les molécules qui ne sont pas d'intérêt et qui sont amenées par le canal 4. Pour cela, l'espacement entre ces piliers est ajusté de sorte à laisser circuler dans la cavité 5, au dessus de l'oscillateur 1, les molécules d'intérêt mais pas les autres molécules. Disposer des piliers en aval de l'oscillateur permet d'intervertir le sens de circulation du fluide et, ainsi de faciliter l'utilisation du dispositif de détection selon l'invention qui ne dépend pas du sens d'écoulement du fluide. Le même résonnement est applicable à la cavité 3 et au canal 2.
   Lorsque les piliers sont disposés sur l'oscillateur dans l'une et ou l'autre des cavités, ils servent à augmenter l'aire de capture disponible pour le greffage des objets biologiques d'intérêt, afin d'accroître la probabilité de capture et la sensibilité du capteur. La hauteur des piliers doit permettre la vibration de l'oscillateur ;
▪ l'oscillateur est un polygone et les moyens de support disposés à au moins un sommet de l'oscillateur.

## Revendications

1. Dispositif pour la détection gravimétrique de particules en milieu fluide, comprenant un oscillateur électromécanique plan (1) se présentant sous la forme d'une plaque, ledit oscillateur comprenant deux faces (1a, 1b), des moyens de support de l'oscillateur, des moyens d'actionnement (15a, 15b, 15c, 15d) dudit oscillateur, et de part et d'autre du plan de l'oscillateur (1), une première cavité (3) située en regard d'une des faces (1b) de l'oscillateur, tel que ledit dispositif comprend en outre une deuxième cavité (5) située en regard de l'autre des faces (1a) de l'oscillateur, l'oscillateur étant suspendu entre les deux cavités, les deux cavités (3, 5) permettant à l'oscillateur (1) de vibrer lorsqu'il est activé par les moyens d'actionnement (15a, 15b, 15c, 15d), un premier canal (4) dont l'une desdites première (3) et deuxième (5) cavités fait partie intégrante pour le passage du fluide sur ladite une des faces (1b) de l'oscillateur, un second canal (2) indépendant du premier canal (4), dont l'autre (5, 3) des cavités fait partie intégrante pour le passage du fluide sur ladite autre (1a) des faces de l'oscillateur, et en en ce que lesdits moyens d'actionnement (15a, 15b, 15c, 15d) se présentent sous la forme d'au moins une électrode (15a, 15b, 15c, 15d) disposée dans le même plan que celui de l'oscillateur électromécanique, et à une distance déterminée (g) de l'oscillateur, de façon à assurer la vibration de l'oscillateur dans son plan, l'oscillateur électromécanique présentant une forme polygonale à plusieurs sommets, de préférence quatre sommets.

2. Dispositif selon la revendication 1, dans lequel l'oscillateur présente une largeur (Lsq) et une épaisseur (Tsq) telles que le rapport de la largeur sur l'épaisseur (Lsq/Tsq) est compris entre environ 10 et 30, et de préférence environ 10.

3. Dispositif selon la revendication 2, dans lequel les moyens de support sont disposés en quatre sommets dudit oscillateur.

4. Dispositif selon l'une quelconque des revendications 1 à 3, dans lequel les moyens de support se présentent sous la forme de pièces massives, telles que des pavés (6).

5. Dispositif selon l'une quelconque des revendications 1 à 3, dans lequel à chaque sommet de l'oscillateur, les moyens de support comprennent une fourche (10) comprenant un manche (11) et deux dents (12), orientés dans le prolongement d'une diagonale de l'oscillateur passant par ledit sommet, les dents étant reliées à une pièce massive (13).

6. Dispositif selon l'une quelconque des revendications 1 ou 3, dans lequel, à chaque sommet de l'oscillateur, les moyens de support comprennent une poutre orientée dans le prolongement d'une diagonale de l'oscillateur passant par ledit sommet, la poutre étant reliée à une pièce massive.

7. Dispositif selon l'une quelconque des revendications 1 à 6, dans lequel ledit oscillateur électromécanique est obtenu à partir d'un substrat métallique.

8. Dispositif selon l'une quelconque des revendications 1 à 6, dans lequel ledit oscillateur électromécanique est obtenu à partir d'un substrat polycristallin.

9. Dispositif selon l'une des revendications 1 à 6, dans lequel ledit oscillateur électromécanique est obtenu à partir d'un substrat monocristallin.

10. Dispositif selon l'une quelconque des revendications 8 ou 9, dans lequel le substrat est à base de silicium.

11. Dispositif selon la revendication 10, dans lequel ledit substrat monocristallin est orienté selon le plan cristallographique (100) ou, alternativement, selon le plan cristallographique (110).

12. Dispositif selon l'une quelconque des revendications 1 à 11, dans lequel au moins une desdites faces (1a, 1b) de l'oscillateur plan (1) est au moins partiellement recouverte d'éléments de reconnaissance moléculaire.

13. Dispositif selon l'une quelconque des revendications 1 à 12, dans lequel au moins une des deux cavités (3, 5) et/ou le ou les canaux (2, 4) contient des piliers dont la section transversale est de forme prise parmi un cercle, une ellipse, et un polygone.

14. Procédé de réalisation d'un dispositif selon l'une des revendications 1 à 13, comprenant les étapes suivantes :
- sélection d'un substrat approprié à la détection gravimétrique envisagée ;
- réalisation, à partir dudit substrat, d'un oscillateur électromécanique plan se présentant sous la forme d'une plaque polygonale à plusieurs sommets, de préférence quatre sommets, ledit oscillateur comprenant deux faces ;
- de part et d'autre du plan de l'oscillateur, réalisation d'une première cavité (3) en regard d'une des faces (1b) de l'oscillateur ;
- réalisation d'une deuxième cavité (5) en regard de l'autre des faces (1a) de l'oscillateur, ledit oscillateur étant suspendu entre les deux cavités (3, 5) ;
- réalisation d'un premier canal (2, 4) dont l'une (3, 5) des première et deuxième cavités fait partie intégrante, pour le passage du fluide sur l'une des faces (1a, 1b) dudit oscillateur ;
- réalisation de moyens d'actionnement se présentant sous la forme d'au moins une électrode disposée dans le même plan que celui de l'oscillateur électromécanique et à une distance déterminée de l'oscillateur de façon à mesurer la vibration de l'oscillateur dans son plan, les deux cavités (3, 5) permettant à l'oscillateur (1) de vibrer lorsqu'il est activé par les moyens d'actionnement (15a, 15b, 15c, 15d), et
- réalisation d'un second canal (4, 2), indépendant du premier canal (2, 4) dont l'autre (5, 3) des cavités fait partie intégrante, pour le passage du fluide sur l'autre des faces (1, 1a) dudit oscillateur.

15. Méthode de détection gravimétrique de particules en milieu fluide, utilisant le dispositif selon l'une des revendications 1 à 13, ladite méthode comprenant les étapes suivantes :
a) générer un flux de fluide comprenant les particules à détecter, dans ledit premier canal pour amener du fluide au contact de l'une des faces de l'oscillateur ;
a1) générer un flux de fluide comprenant les particules à détecter, dans ledit second canal pour amener du fluide également au contact de l'autre des deux faces de l'oscillateur.
b) mettre en vibration l'oscillateur dans son plan à une fréquence initiale et selon un mode vibratoire déterminé ;
c) détecter la fréquence de vibration de l'oscillateur ;
d) détecter une modification de la fréquence par rapport à la fréquence de vibration initiale de l'oscillateur ; et
ledit mode vibratoire étant pris dans le groupe constitué par le mode vibratoire de Lamé et le mode vibratoire d'extension volumique.

16. Méthode de détection gravimétrique selon la revendication 15, comprenant une étape e) de récupération et de traitement de données de détection générées aux étapes c) et d).

17. Méthode de détection gravimétrique selon l'une quelconque des revendications 15 à 16, dans laquelle la fréquence de vibration initiale est une fréquence de résonance de l'oscillateur.

18. Méthode de détection gravimétrique selon la revendication 15, mettant en oeuvre un oscillateur de forme polygonale à plusieurs sommets, de préférence quatre sommets, et quatre électrodes disposées chacune en regard de l'un des côtés de l'oscillateur, dans laquelle la mise en vibration de l'oscillateur prévue à l'étape b), est précédée d'une étape b1) dans laquelle au moins deux électrodes consécutives sont alimentées en champ sinusoïdal en opposition de phase et à une fréquence déterminée (t) caractéristique des particules à détecter.

19. Méthode de détection gravimétrique selon la revendication 18, dans laquelle l'étape b1) est précédée d'une étape b0) dans laquelle le flux de fluide est arrêté.

20. Méthode de détection gravimétrique selon l'une des revendications 15 à 18, comprenant une étape a0) préalable à l'étape a), dans laquelle au moins une surface dudit oscillateur est recouverte au moins partiellement par des éléments de reconnaissance moléculaire.

21. Méthode de détermination de cinétique d'interaction entre une molécule et un élément de reconnaissance moléculaire complémentaire utilisant la méthode de détection gravimétrique selon l'une des revendications 15 à 19 et comprenant une étape d') de détection d'une nouvelle modification de la fréquence correspondant à un retour à la valeur de la fréquence initiale de l'oscillateur, cette étape d') étant réalisée après l'étape d).

## Patentansprüche

1. Einrichtung zur gravimetrischen Detektion von Teilchen in einem Fluidmedium, umfassend einen planaren elektromechanischen Oszillator (1), der in der Form einer Platte vorliegt, wobei der Oszillator zwei Flächen (1a, 1b), Tragmittel des Oszillators, Betätigungsmittel (15a, 15b, 15c, 15d) des Oszillators, und beiderseits der Ebene des Oszillators (1), einen ersten Hohlraum (3) umfasst, der einer der Flächen (1b) des Oszillators zugewandt angeordnet ist, sodass die Einrichtung weiter einen zweiten Hohlraum (5) umfasst, der der anderen der Flächen (1a) des Oszillators zugewandt angeordnet ist, wobei der Oszillator zwischen den beiden Hohlräumen aufgehängt ist, wobei die beiden Hohlräume (3, 5) es dem Oszillator (1) ermöglichen, bei Aktivierung durch die Betätigungsmittel (15a, 15b, 15c, 15d) zu schwingen, einen ersten Kanal (4), von dem einer der ersten (3) und zweiten (5) Hohlräume ein integraler Bestandteil für den Durchgang des Fluids auf die eine der Flächen (1b) des Oszillators ist, einen zweiten Kanal (2), der unabhängig von dem ersten Kanal (4) ist, von dem der andere (5, 3) der Hohlräume ein integraler Bestandteil für den Durchgang des Fluids auf die andere (1a) der Flächen des Oszillators ist, und dadurch, dass die Betätigungsmittel (15a, 15b, 15c, 15d) in der Form mindestens einer Elektrode (15a, 15b, 15c, 15d) vorliegt, die in der gleichen Ebene wie diejenige des elektromechanischen Oszillators angeordnet ist, und in einem bestimmten Abstand (g) vom Oszillator, um die Schwingung des Oszillators in seiner Ebene zu gewährleisten, wobei der elektromechanische Oszillator eine polygonale Form mit mehreren Eckpunkten, vorzugsweise vier Eckpunkten aufweist.

2. Einrichtung nach Anspruch 1, wobei der Oszillator eine Breite (Lsq) und Dicke (Tsq) aufweist, sodass das Verhältnis der Breite zur Dicke (Lsq/Tsq) zwischen etwa 10 und 30, und vorzugsweise etwa 10 beträgt.

3. Einrichtung nach Anspruch 2, wobei die Tragmittel in vier Eckpunkte des Oszillators angeordnet sind.

4. Einrichtung nach einem der Ansprüche 1 bis 3, wobei die Tragmittel in der Form von massiven Teilen, wie beispielsweise Pflastersteinen (6), vorliegen.

5. Einrichtung nach einem der Ansprüche 1 bis 3, wobei an jedem Eckpunkt des Oszillators die Tragmittel eine Gabel (10) umfasst, umfassend einen Griff (11) und zwei Zähnen (12), die in der Verlängerung einer durch den Eckpunkt verlaufenden Diagonale des Oszillators ausgerichtet ist, wobei die Zähne mit einem massiven Teil (13) verbunden sind.

6. Einrichtung nach einem der Ansprüche 1 oder 3, wobei an jedem Eckpunkt des Oszillators die Tragmittel einen Träger umfassen, der in der Verlängerung einer durch den Eckpunkt verlaufenden Diagonale des Oszillators ausgerichtet ist, wobei der Träger mit einem massiven Teil verbunden ist.

7. Einrichtung nach einem der Ansprüche 1 bis 6, wobei der elektromechanische Oszillator aus einem Metallsubstrat erhalten wird.

8. Einrichtung nach einem der Ansprüche 1 bis 6, wobei der elektromechanische Oszillator aus einem polykristallinen Substrat erhalten wird.

9. Einrichtung nach einem der Ansprüche 1 bis 6, wobei der elektromechanische Oszillator aus einem monokristallinen Substrat erhalten wird.

10. Einrichtung nach einem der Ansprüche 8 oder 9, wobei das Substrat auf Siliziumbasis ist.

11. Einrichtung nach Anspruch 10, wobei das monokristalline Substrat gemäß der kristallographischen Ebene (100) oder alternativ gemäß der kristallographischen Ebene (110) ausgerichtet ist.

12. Einrichtung nach einem der Ansprüche 1 bis 11, wobei mindestens eine der Flächen (1a, 1b) des planaren Oszillators (1) mindestens teilweise mit molekularen Erkennungselementen abgedeckt ist.

13. Einrichtung nach einem der Ansprüche 1 bis 12, wobei mindestens einer der beiden Hohlräume (3, 5) und/oder der oder die Kanäle (2, 4) Säulen enthält, deren Querschnitt aus einer Form ist, die aus einem Kreis, einer Ellipse und einem Polygon ausgewählt ist.

14. Produktionsprozess einer Einrichtung nach einem der Ansprüche 1 bis 13, umfassend die folgenden Schritte:
- Auswahl eines geeigneten Substrats für die vorgesehene gravimetrische Detektion;
- Produktion, aus dem Substrat, eines planaren elektromechanischen Oszillators, der in der Form einer polygonalen Platte mit mehreren Eckpunkten, vorzugsweise vier Eckpunkten, vorliegt, wobei der Oszillator zwei Flächen umfasst;
- beiderseits der Ebene des Oszillators, Produktion eines ersten Hohlraums (3) einer der Flächen (1b) des Oszillators zugewandt;
- Produktion eines zweiten Hohlraums (5) der anderen der Flächen (1a) des Oszillators zugewandt, wobei der Oszillator zwischen den beiden Hohlräumen (3, 5) aufgehängt ist;
- Produktion eines ersten Kanals (2, 4), von dem einer (3, 5) der ersten und zweiten Hohlräume einen integralen Bestandteil bildet, für den Durchgang des Fluids auf die eine der Flächen (1a, 1b) des Oszillators;
- Produktion von Betätigungsmitteln, die in der Form mindestens einer Elektrode vorliegen, die in der gleichen Ebene wie derjenigen des elektromechanischen Oszillators und in einem bestimmten Abstand vom Oszillator angeordnet ist, um die Schwingung des Oszillators in seiner Ebene zu messen, wobei die beiden Hohlräume (3, 5) es dem Oszillator (1) ermöglichen, bei Aktivierung durch die Betätigungsmittel (15a, 15b, 15c, 15d) zu schwingen, und
- Produktion eines zweiten Kanals (4, 2), der unabhängig von dem ersten Kanal (2, 4) ist, von dem der andere (5, 3) der Hohlräume einen integralen Bestandteil bildet, für den Durchgang des Fluids auf die andere der Flächen (1, 1a) des Oszillators.

15. Verfahren zur gravimetrischen Detektion von Teilchen in einem Fluidmedium unter Verwendung der Einrichtung nach einem der Ansprüche 1 bis 13, wobei das Verfahren die folgenden Schritte umfasst:
a) Erzeugen eines Fluidstroms, der die zu detektierenden Teilchen umfasst, in dem ersten Kanal, um Fluid mit einer der Flächen des Oszillators in Kontakt zu bringen;
a1) Erzeugen eines Fluidstroms, der die zu detektierenden Teilchen umfasst, in dem zweiten Kanal, um Fluid auch mit der anderen der beiden Flächen des Oszillators in Kontakt zu bringen.
b) In Schwingung versetzen des Oszillators in seiner Ebene mit einer Anfangsfrequenz und gemäß einem bestimmten Schwingungsmodus;
c) Detektieren der Schwingungsfrequenz des Oszillators;
d) Detektieren einer Frequenzänderung gegenüber der anfänglichen Schwingungsfrequenz des Oszillators; und
wobei der Schwingungsmodus ausgewählt ist aus der Gruppe, bestehend aus dem Lamé-Schwingungsmodus und dem Volumenausdehnungs-Schwingungsmodus.

16. Verfahren zur gravimetrischen Detektion nach Anspruch 15, umfassend einen Schritt e) des Rückgewinnens und des Verarbeitens von Detektionsdaten, die in den Schritten c) und d) erzeugt wurden.

17. Verfahren zur gravimetrischen Detektion nach einem der Ansprüche 15 bis 16, wobei die anfängliche Schwingungsfrequenz eine Resonanzfrequenz des Oszillators ist.

18. Verfahren zur gravimetrischen Detektion nach Anspruch 15 unter Einsetzen eines polygonalen Oszillators mit mehreren Eckpunkten, vorzugsweise vier Eckpunkten, und vier Elektroden, die jeweils einer der Seiten des Oszillators zugewandt angeordnet sind, wobei dem in Schritt b) vorgesehene In-Schwingung-Versetzen des Oszillators ein Schritt b1) vorausgeht, bei dem mindestens zwei aufeinanderfolgende Elektroden mit einem sinusförmigen Feld in Phasengegenrichtung und mit einer bestimmten Frequenz (t), die für die zu detektierenden Teilchen charakteristisch ist, versorgt werden.

19. Verfahren zur gravimetrischen Detektion nach Anspruch 18, wobei dem Schritt b1) ein Schritt b0) vorausgeht, bei dem der Fluidstrom gestoppt wird.

20. Verfahren zur gravimetrischen Detektion nach einem der Ansprüche 15 bis 18, umfassend einen Schritt a0) vor dem Schritt a), wobei mindestens eine Oberfläche des Oszillators mindestens teilweise durch molekulare Erkennungselemente abgedeckt ist.

21. Verfahren zur Bestimmung der Wechselwirkungskinetik zwischen einem Molekül und einem komplementären molekularen Erkennungselement unter Verwendung des Verfahrens zur gravimetrischen Detektion nach einem der Ansprüche 15 bis 19 und umfassend einen Schritt d') zur Detektion einer neuen Frequenzveränderung, die einer Rückkehr zum Wert der Anfangsfrequenz des Oszillators entspricht, wobei dieser Schritt d') nach dem Schritt d) durchgeführt wird.

## Claims

1. Device for gravimetrically detecting particles in a fluid medium, comprising a flat electromechanical oscillator (1) presented in the form of a plate, said oscillator comprising two faces (1a, 1b), means for supporting the oscillator, means for actuating (15a, 15b, 15c, 15d) said oscillator, and on either side of the plane of the oscillator (1), a first cavity (3) located opposite one of the faces (1b) of the oscillator, such that said device further comprises a second cavity (5) located opposite the other of the faces (1a) of the oscillator, the oscillator being suspended between the two cavities, the two cavities (3, 5) making it possible for the oscillator (1) to vibrate when it is activated by the actuation means (15a, 15b, 15c, 15d), a first channel (4) of which one of said first (3) and second (5) cavities forms an integral part for the passage of the fluid over said one of the faces (1b) of the oscillator, a second channel (2) independent from the first channel (4), of which the other (5, 3) of the cavities forms an integral part for the passage of the fluid over said other (1a) of the faces of the oscillator, and in that said actuation means (15a, 15b, 15c, 15d) are presented in the form of at least one electrode (15a, 15b, 15c, 15d) arranged in the same plane as that of the electromechanical oscillator, and at a determined distance (g) from the oscillator, so as to ensure the vibration of the oscillator in the plane thereof, the electromechanical oscillator having a polygonal shape with several vertices, preferably four vertices.

2. Device according to claim 1, wherein the oscillator has a width (Lsq) and a thickness (Tsq) such as the width/thickness (Lsq/Tsq) ratio is between around 10 and 30, and preferably around 10.

3. Device according to claim 2, wherein the support means are arranged in four vertices of said oscillator.

4. Device according to any of claims 1 to 3, wherein the support means are presented in the form of solid parts, such as blocks (6).

5. Device according to any any of claims 1 to 3, wherein at each vertex of the oscillator, the support means comprise a fork (10) comprising a sleeve (11) and two teeth (12), oriented in a diagonal extension of the oscillator passing through said vertex, the teeth being connected to a solid part (13).

6. Device according to any of claims 1 or 3, wherein, at each vertex of the oscillator, the support means comprise a beam oriented in a diagonal extension of the oscillator passing through said vertex, the beam being connected to a solid part.

7. Device according to any of claims 1 to 6, wherein said electromechanical oscillator is obtained from a metal substrate.

8. Device according to any of claims 1 to 6, wherein said electromechanical oscillator is obtained from a polycrystalline substrate.

9. Device according to any of claims 1 to 6, wherein said electromechanical oscillator is obtained from a monocrystalline substrate.

10. Device according to any of claims 8 or 9, wherein the substrate is silicon-based.

11. Device according to claim 10, wherein said monocrystalline substrate is oriented along the crystallographic plane (100) or, alternatively, along the crystallographic plane (110).

12. Device according to any of claims 1 to 11, wherein at least one of said faces (1a, 1b) of the flat oscillator (1) is at least partially covered with molecule recognition elements.

13. Device according to any of claims 1 to 12, wherein at least one of the two cavities (3, 5) and/or the channel(s) (2, 4) contains pillars of which the cross-section is of a shape selected from a circle, an ellipsis, and a polygon.

14. Method for producing a device according to any of claims 1 to 13, comprising the following steps:
- selecting a substrate suitable for the gravimetric detection envisaged;
- producing, from said substrate, a flat electromechanical oscillator being presented in the form of a polygonal plate with several vertices, preferably four vertices, said oscillator comprising two faces;
- on either side of the plane of the oscillator, producing a first cavity (3) opposite one of the faces (1b) of the oscillator;
- producing a second cavity (5) opposite the other of the faces (1a) of the oscillator, said oscillator being suspended between the two cavities (3, 5);
- producing a first channel (2, 4) of which one (3, 5) of the first and second cavities forms an integral part, for the passage of the fluid over one of the faces (1a, 1b) of said oscillator;
- producing actuation means being presented in the form of at least one electrode arranged in the same plane as that of the electromechanical oscillator and at a determined distance from the oscillator, so as to measure the vibration of the oscillator in the plane thereof, the two cavities (3, 5) making it possible for the oscillator (1) to vibrate when it is activated by the actuation means (15a, 15b, 15c, 15d), and
- producing a second channel (4, 2), independent of the first channel (2, 4) of which the other (5, 3) of the cavities forms an integral part, for the passage of the fluid over the other of the faces (1, 1a) of said oscillator.

15. Method for gravimetrically detecting particles in a fluid environment, using the device according to any of claims 1 to 13, said method comprising the following steps:
a) generating a fluid flow comprising the particles to be detected, in said first channel to bring the fluid into contact with one of the faces of the oscillator;
a1) generating a fluid flow comprising the particles to be detected, in said second channel to also bring the fluid into contact with the other of the two faces of the oscillator;
b) vibrating the oscillator in the plane thereof at an initial frequency and according to a determined vibratory method;
c) detecting the vibration frequency of the oscillator;
d) detecting a modification of the frequency with respect to the initial vibration frequency of the oscillator; and
said vibratory method being taken from the group consisting of the Lamé vibratory method and the volume extension vibratory method.

16. Gravimetric detection method according to claim 15, comprising a step e) of recovering and processing detection data generated in steps c) and d).

17. Gravimetric detection method according to any of claims 15 to 16, wherein the initial vibration frequency is a resonance frequency of the oscillator.

18. Gravimetric detection method according to claim 15, using a polygonally-shaped oscillator with several vertices, preferably four vertices, and four electrodes each arranged opposite one of the sides of the oscillator, wherein the vibrating of the oscillator provided in step b), is preceded with a step b1), wherein at least two consecutive electrodes are supplied with a opposed phase sinusoidal field and at a determined frequency (t), characteristic of the particles to be detected.

19. Gravimetric detection method according to claim 18, wherein step b1) is preceded by a step b0) wherein the fluid flow is stopped.

20. Gravimetric detection method according to any of claims 15 to 18, comprising a step a0) prior to step a), wherein at least one surface of said oscillator is covered at least partially by molecule recognition elements.

21. Method for determining interaction kinetics between a molecule and a complementary molecule recognition element using the gravimetric detection method according to any of claims 15 to 19 and comprising a step d') of detecting a new modification of the frequency corresponding to a return to the value of the initial frequency of the oscillator, this step d') being carried out after step d).
